# EUROPÄISCHE PATENTSCHRIFT

(11) **EP 0 772 028 B1**
(45) Veröffentlichungstag und Bekanntmachung des Hinweises auf die Patenterteilung: **17.03.2004**
(21) Anmeldenummer: 96117336.6
(22) Anmeldetag: 29.10.1996
(51) Int. Cl.: G01G 11/04

(54) **Plattenbanddosierer**
Plate dosing conveyor
Convoyeur de dosage à plaques

(30) Priorität: 30.10.1995 DE 19540444
(43) Veröffentlichungstag der Anmeldung: 07.05.1997
(73) Patentinhaber: Schenck Process GmbH, 64293 Darmstadt (DE)
(72) Erfinder: Biebel, Jürgen, 65428 Rüsselsheim (DE); Opper, Karlheinz, 64625 Bensheim (DE); Schütz, Andreas, 65474 Bischofsheim (DE)
(74) Vertreter: Behrens, Helmut, Dipl.-Ing.

(56) Entgegenhaltungen:
- DE-A- 1 456 699
- DE-A- 4 200 178
- DE-B- 1 246 567
- FR-A- 2 105 087
- GB-A- 2 094 011
- US-A- 4 611 676
- MANFRED KOCHSIEK: "Handbuch des Wägens" , FRIEDR. VIEWEG & SOHN , BRAUNSCHWEIG/WIESBADEN XP002057363 * Seite 319, Absatz 1 *

## Beschreibung

Die Erfindung betrifft einen Plattenbanddosierer gemäß dem Oberbegriff des Patentanspruchs 1.

Ein derartiger Plattenbanddosierer ist aus dem Kochsiek, Handbuch der Wägetechnik, Braunschweig 1985, Seiten 333, 334 vorbekannt. Bei dieser Dosierplattenbandwaage ist ein Endlosplattenband vorgesehen, das um eine Antriebs- und Umlenkrolle umläuft. Die gesamte angetriebene Bandanordnung ist an einem Federkreuz drehbar gelagert, wobei sich das andere Ende der Bandanordnung auf einer Wägezelle abstützt. Aus der hebelartigen Anordnung und dem Gewichtssignal der Wägezelle kann sowohl die Förderstärke als auch die Fördermenge rechnerisch ermittelt werden. Eine derartige Ausbildung einer Dosierplattenbandwaage ist wegen des hohen apparativen Aufwandes technisch schwierig zu realisieren und sehr kostenaufwendig.

Aus der DE 1 456 699 A ist ein Plattenbandförderer bekannt, bei dem in das Plattenband eine Einrichtung zum kontinuierlichen Verwiegen des aus einem Bunker abgezogenen Gutes eingebaut ist. Das Plattenband ist als Endlosplattenband ausgebildet, das zwischen einer Antriebs- und einer Umlenkrolle umläuft. Das Plattenband besteht aus Stahlblechplatten, die sich im oberen Trum schuppenartig auf- oder voreinander legen. Zur Lagerung und Führung sind unter den Platten Laufrollen angeordnet, die sich auf zwei seitlichen Laufschienen am Plattenbandrand abstützen und synchron mit dem Plattenband umlaufen. Die beiden parallel angeordneten Laufschienen sind im Bereich des Abwurfpunktes des Plattenbandes in Teilschienenbereiche aufgeteilt. Dadurch sind zwei parallel angeordnete Schienenbereiche gebildet, die sich jeweils über eine Stößelkonstruktion auf zwei Druckmeßdosen abstützen, die zur Ermittlung der Gewichtsbelastung auf dem Plattenband dienen. Dabei übertragen die Laufrollen auf den Schienenabschnitt über den Druckmeßdosen die Gewichtskraft in diesen Plattenbandabschnitt. Dieser Bandabschnitt stellt im Grunde eine Wägebrücke dar, die den auf diesen Bandabschnitt befindlichen Fördergutteil erfaßt. Derartige Wägebrückenkonstruktionen mit vier und mehr Druckmeßdosen bzw. Wägezellen sind konstruktiv sehr aufwendig und störanfällig. Insbesondere bei den rauhen Umweltbedingungen wie sie in der Regel bei Plattenbandförderern vorkommen.

In der DE 42 00 178 A1 ist ein Gurtförderer offenbart, mit dem die Gewichtskraft der auf dem Gurtförderband vorhandenen Fördergüter ermittelbar ist. Dazu sind seitlich unter dem Fördergurt zwei in Förderrichtung vorgesehene Trägerprofile angeordnet, deren Durchbiegung aufgrund des Gewichts des Fördergutes erfaßt wird. Dazu sind horizontal oben und unten auf den Trägerprofilen Dehnungsmeßstreifen zur Biegespannungsermittlung appliziert, die ein elektrisches Signal erzeugen, das der Gewichtsbelastung entspricht. Mit einer derartigen Meßvorrichtung zur Erfassung der Biegespannungen sind vorzugsweise nur kontinuierliche Flächenbelastungen erfaßbar, die für eine überrollende punktuelle Krafteinleitung ungeeignet sind.

Allerdings ist aus der EP 0 500 971 A1 ist ein Wägeverfahren mittels einer Wägeschiene bekannt, die zur Erfassung überrollender Gewichtsbelastungen vorgesehen ist. Dabei besteht die Wägeschiene aus einem Gleisabschnitt für ein Schienenfahrzeug, das zwischen zwei Schwellen gelagert ist. In der neutralen Faser einer derartigen Schiene sind im Bereich des Schwellenfaches zwei Dehnungmeßelemente appliziert, die die Schubspannungen des überrollenden Fahrzeugrades erfassen, woraus mit einer Auswertevorrichtung die Gewichtsbelastung ermittelbar ist. Derartige Wägeverfahren mit Wägeschienen wurden bisher allerdings nur bei Gleisfahrzeugwaagen angewandt.

Der Erfindung liegt deshalb die Aufgabe zugrunde, einen Plattendosierer der eingangs genannten Art so zu verbessern, daß bei hinreichender Wägegenauigkeit der konstruktive Aufwand zur Gewichtserfassung erheblich vermindert wird.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, daß durch an einer Laufschiene angeordnete Dehnungsmeßelemente diese Wägeschiene sowohl zur Führung des Plattenbandes genutzt wird als auch zur Meßwerterfassung dient. Hierdurch wird eine aufwendige Krafteinleitungsvorrichtung entbehrlich, da diese unmittelbar durch die notwendige Führungsschiene erbracht wird. Gleichzeitig wird hierdurch eine gleichmäßige Lagerung des Plattenbandes erreicht, so daß weitgehend keine inneren Reibungen im Schüttgutstrom erzeugt werden, so daß eine momentenfreie Messung gewährleistet ist.

Bei einer besonderen Ausbildungsart des Plattendosierers geschieht die Krafteinleitung direkt über Lagerrollen des Plattenbandes auf die Wägeschiene. Durch die direkt applizierten Dehnungsmeßelemente ist eine derartige Meßeinrichtung weitgehend vor Staub und Emissionseinwirkungen geschützt. Durch eine derartige Rollenlagerung entsteht auch gleichzeitig eine reibungsarme Lagerung des Plattenbandes, wodurch eine genaue Krafteinleitung in die Wägeschiene ermöglicht wird.

Bei einer anderen besonderen Ausführungsart sind die Lagerrollen so ausgebildet, daß deren mittlere Auflagestelle mit einer Aussparung versehen ist, so daß das Plattenband unmittelbar an seiner Schwerpunktstelle über die Wägeeinrichtung geführt wird. Hierdurch entsteht sowohl eine exakte Führung des Plattenbandes als auch eine genaue Krafteinleitung in die Dehnungsmeßelemente.

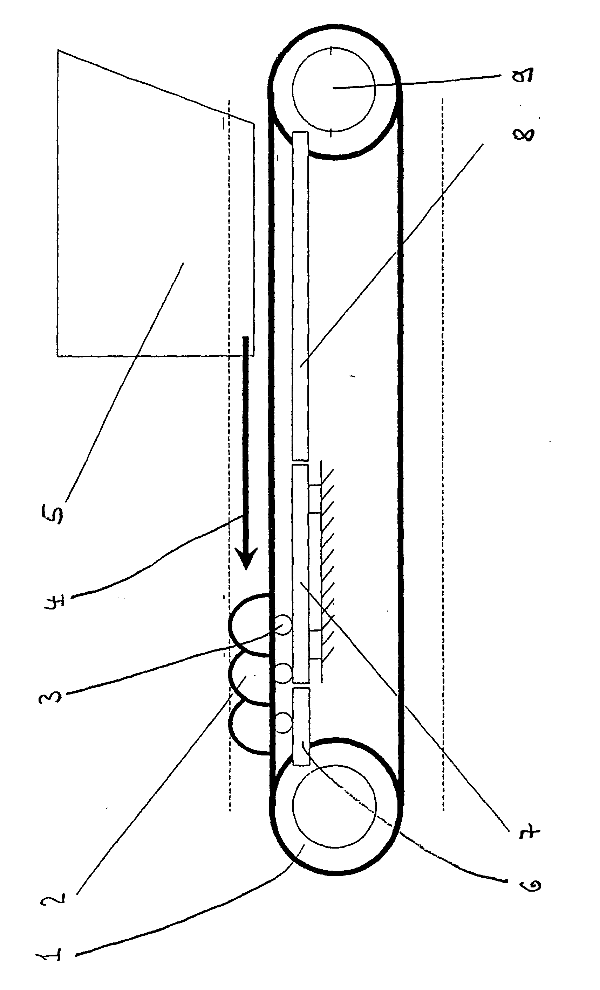

Die Erfindung wird anhand eines Ausführungsbeispiels, das in der Zeichnung dargestellt ist, näher erläutert. Die Zeichnung zeigt einen Plattendosierer mit einer Wägeschiene.

In der Zeichnung ist ein Plattendosierer schematisch dargestellt, dessen Plattenkette 2 über Rollen 3 auf einer Wäge- 7 und zwei Laufschienen 6, 8 umläuft.

Der Plattendosierer besteht aus einer Antriebs- 9 und einer Umlenkrolle 1, um die ein Plattenband in Form der Plattenkette 2 endlos umläuft. An dem kettenartigen Plattenband 2 sind Lagerrollen 3 angebracht, die auf einer oder mehreren Laufschienen 6, 7, 8 synchron mit dem Plattenband 2 umlaufen. Eine der Laufschienen ist dabei als Wägeschiene 7 ausgebildet, die mit nicht dargestellten direkt applizierten Dehnungsmeßelementen versehen ist.

Die Lagerrollen 3 enthalten bei einer vorzugsweisen Ausbildung in Bandmitte eine Führungsnut, in die die Laufschienen 6, 7, 8 formschlüssig hineinragen. Dabei wird eine weitgehend momentenfreie und damit genaue Krafteinleitung in die Wägeschiene 7 erreicht, die auch gleichzeitig zur Führung des Plattenbandes 2 dient. Quer zur Förderrichtung 4 können bei breiteren Plattenbändern 2 oder bei anderen Ausführungsarten von Plattendosierern auch zwei und mehr Wägeschienen 7 parallel nebeneinander angeordnet werden, deren gemeinsame Signalauswertung zu einer höheren Meßgenauigkeit genutzt werden kann.

Die Wägeschiene 7 kann sich in Förderrichtung 4 auch unter der gesamten Länge des Plattenbandes 2 erstrecken, so daß keine separate Laufschiene mehr erforderlich ist. Hierdurch entfallen gleichzeitig auch die Stoßkanten zwischen den Schienen, wodurch die dynamischen Kräfte an den Schienenstößen eliminiert werden. Die Krafteinleitung über Lagerrollen 3 in die Wägeschiene 7 ist besonders vorteilhaft, da diese Krafteinleitungsart weitgehend momentenfrei und reibungsarm erfolgt, so daß keine nennenswerten Meßwertverfälschungen eintreten. Allerdings wäre es auch denkbar, das Plattenband 2 direkt oder über andere Lagerelemente wie die Lagerrollen 3 auf einer oder mehreren Wägeschienen 7 zu lagern. Bei einer Signalauswertung ist es besonders vorteilhaft, wenn die Krafteinleitung auf der Wägeschiene 7 ein ganzzahliges Verhältnis zum Lagerrollenabstand enthält.

Die Funktion des Plattenbanddosierers erfolgt im wesentlichen nach dem bekannten Wägeverfahren bei Dosierbandwaagen, wie dies aus dem Kochsiek, Seite 319 bekannt ist. Nach der aus der Bandbelastung, der Länge der Wägebrücke bzw. Wägeschiene und der Fördergeschwindigkeit sowohl die Förderstärke als auch die Fördermenge bestimmt werden können.

Bei dem in der Zeichnung dargestellten Plattendosierer wird das Wägegut entsprechend einer Dosierbandwaage über einen Vorratsbehälter 5 kontinuierlich auf das Förder- bzw. Plattenband 2 aufgegeben, welches mit weitgehend gleichmäßiger Fördergeschwindigkeit angetrieben wird. Dabei kann auch ein geregelter Betrieb wie bei Dosierbandwaagen durchgeführt werden, bei dem eine bestimmte Förderstärke oder Fördermenge vorgebbar ist. Die von der Wägeschiene 7 erzeugten Gewichtssignale werden weitgehend nach bekannten Auswerteverfahren ermittelt und in ein Förderstärkensignal oder ein Fördermengensignal umgerechnet. Die Erfassung des Wägesignals entsprechend einer Bandbeladung erfolgt dabei weitgehend nach dem aus der EP 0 500 971 bekannten Wägeverfahren zur Wägung von über Wägeschienen fahrenden Eisenbahnwaggons. Als Auswerteeinrichtung ist dabei eine nicht dargestellte Elektronikschaltung einsetzbar, der die Wägesignale der Wägeschiene 7, die Länge der Wägeschiene 7 als auch die Bandgeschwindigkeit zuführbar sind, woraus durch diese die Förderstärke als auch die Fördermenge ermittelbar und regelbar ist.

## Patentansprüche

1. Plattenbanddosierer bestehend aus einem endlosen Plattenband (2), das um mindestens eine Antriebs- (9) und eine Umlenkrolle (1) umläuft und daß an dem Plattenband (2) zur Abstützung Lagerrollen (3) angeordnet sind, die mit dem Plattenband (2) umlaufen und die auf mindestens einer in Förderrichtung (4) verlaufenden Laufschiene geführt und gelagert werden, **dadurch gekennzeichnet, daß** mindestens ein Teil der Laufschiene (6, 7, 8) als Wägeschiene (7) ausgebildet ist, an der direkt Dehnungsmeßelemente appliziert sind, wobei die Wägeschiene (7) zur Erfassung der Gewichtskraft des Fördergutes dient.

2. Plattenbanddosierer nach Anspruch 1, **dadurch gekennzeichnet, daß** die Laufschiene (6, 8) und/oder die Wägeschiene (7) in der Mitte des Plattenbandes (2) angeordnet und in Förderrichtung (4) hintereinander ein- oder mehrteilig ausgebildet ist, wobei das Plattenband (2) auf dieser Schiene (6, 7, 8) gelagert ist.

3. Plattenbanddosierer nach einem der Ansprüche 1 oder 2, **dadurch gekennzeichnet, daß** das Plattenband (2) auf zwei oder mehr Lauf- (6, 8) und/oder Wägeschienen (7) gelagert ist, die in Förderrichtung (4) parallel nebeneinander angeordnet sind.

4. Plattenbanddosierer nach einem der vorhergehenden Ansprüche, **dadurch gekennzeichnet, daß** die Lagerrollen (3) in ihrer Mittelebene eine umlaufende Führungsnut, in die die Laufschiene (6, 8) und/oder die Wägeschiene (7) formschlüssig hineinragt und die zur Führung und Krafteinleitung dient.

5. Plattenbanddosierer nach einem der vorhergehenden Ansprüche, **dadurch gekennzeichnet, daß** die Länge der Wägeschiene (7) ein ganzzahliges Vielfaches der Lagerrollenabstände beträgt.

6. Plattenbanddosierer nach einem der vorhergehenden Ansprüche, **dadurch gekennzeichnet, daß** der Plattenbanddosierer eine Auswerteeinrichtung enthält, die aus der Fördergeschwindigkeit, der Bandbeladung und einer vorgebbaren Länge der Wägeschiene (7) die Förderstärke und/oder die Fördermenge ermittelt oder nach vorgebbaren Sollwerten regelt.

## Claims

1. Plate conveyor dosing apparatus consisting of a continuous plate conveyor (2) which passes around at least one drive pulley (9) and a deflection pulley (1), and that bearing rollers (3) are disposed at the plate conveyor (2) for support purposes, which rollers circulate with the plate conveyor (2) and are guided and mounted on at least one running rail extending in the conveying direction (4), **characterised in that** at least a part of the running rail (6, 7, 8) is formed as a weighing rail (7) to which strain gauges are directly applied, wherein the weighing rail (7) serves to detect the weight force of the material being conveyed.

2. Plate conveyor dosing apparatus according to Claim 1, **characterised in that** the running rail (6, 8) and/or the weighing rail (7) is/are disposed in the centre of the plate conveyor (2) and formed as a single or multiple part in succession in the conveying direction (4), wherein the plate conveyor (2) is mounted on this rail (6, 7, 8).

3. Plate conveyor dosing apparatus according to either of Claims 1 and 2, **characterised in that** the plate conveyor (2) is mounted on two or more running (6, 8) and/or weighing rails (7), which are disposed in parallel side-by-side in the conveying direction (4).

4. Plate conveyor dosing apparatus according to any one of the preceding Claims, **characterised in that** the bearing rollers (3) ... in their centre plane a circulating guide groove into which the running rail (6, 8) and/or the weighing rail (7) project(s) in positive engagement and which serves to guide and transfer force.

5. Plate conveyor dosing apparatus according to any one of the preceding Claims, **characterised in that** the length of the weighing rail (7) is an integral multiple of the bearing roller spacings.

6. Plate conveyor dosing apparatus according to any one of the preceding Claims, **characterised in that** the plate conveyor dosing apparatus comprises an evaluation device which determines the conveying capacity and/or the conveyed quantity from the conveying speed, the conveyor load and a predeterminable length of the weighing rail (7) or regulates it/them according to predeterminable desired values.

## Revendications

1. Convoyeur de dosage à palettes constitué d'un convoyeur à palettes (2) sans fin qui circule autour d'au moins un rouleau d'entraînement (9) et un rouleau de renvoi (1), des galets de support (3), qui circulent avec le transporteur à palettes (2) et qui sont guidés et montés sur au moins un rail de roulement s'étendant dans la direction de transport (4), étant disposés sur le transporteur à palettes (2) pour le soutenir, **caractérisé en ce qu'**au moins une partie du rail de roulement (6, 7, 8) est réalisée en tant que rail de pesée (7) sur lequel sont appliqués directement des éléments de mesure d'allongement, le rail de pesée (7) servant à enregistrer la force de poids du produit transporté.

2. Transporteur de dosage à palettes selon la revendication 1, **caractérisé en ce que** le rail de roulement (6, 8) et/ou le rail de pesée (7) sont disposés au milieu du transporteur à palettes (2) et sont réalisés en une ou plusieurs parties, l'une derrière l'autre, dans la direction de transport (4), le transporteur à palettes (2) étant monté sur ce rail (6, 7, 8).

3. Transporteur de dosage à palettes selon l'une des revendications 1 ou 2, **caractérisé en ce que** le transporteur à palettes (2) est monté sur deux rails de roulement (6, 8) et/ou rails de pesée (7) ou plus qui sont disposés côte à côte et parallèlement dans la direction de transport (4).

4. Transporteur de dosage à palettes selon l'une des revendications précédentes, **caractérisé en ce que** les galets de support (3) présentent dans leur plan central une rainure de guidage périphérique dans laquelle le rail de roulement (6, 8) et/ou le rail de pesée (7) s'engage par complémentarité de forme et qui sert au guidage et à l'introduction des forces.

5. Transporteur de dosage à palettes selon l'une des revendications précédentes, **caractérisé en ce que** la longueur du rail de pesée (7) constitue un multiple entier des distances entre les galets de support.

6. Transporteur de dosage à palettes selon l'une des revendications précédentes, **caractérisé en ce que** le transporteur de dosage à palettes contient un dispositif d'exploitation qui, à partir de la vitesse de transport, de la charge sur le transporteur et d'une longueur prédéfinie du rail de pesée (7), détermine le débit de transport et/ou la quantité transportée ou les régule suivant des valeurs de consigne pouvant être prédéfinies.
